# EUROPÄISCHE PATENTANMELDUNG

(11) **EP 2 743 522 A1**
(43) Veröffentlichungstag der Anmeldung: **18.06.2014**
(21) Anmeldenummer: 12008282.1
(22) Anmeldetag: 12.12.2012
(51) Int. Cl.: F16C 19/52, G01M 13/04, G01B 7/14

(54) **Momenten- oder (Groß-)Wälzlager oder Drehverbindung mit Abstandssensor (en)**

(71) Anmelder: IMO Holding GmbH, 91350 Gremsdorf (DE)
(72) Erfinder: Lamm, Alexander, 91074 Herzogenaurach (DE); Giera, Artur, 91315 Höchstadt a. d. Aisch (DE)
(74) Vertreter: Küchler, Stefan

(57) **Zusammenfassung**

Die Erfindung betrifft ein Momenten- oder (Groß-)Wälzlager (1) oder eine Drehverbindung (1), aufweisend mindestens einen berührungslos sensierenden, vorzugsweise mittels induktivem Verfahren messenden oder erfassenden, alternativ ein mittels Schallwellen oder Wirbelstromverfahren messenden oder erfassenden, gegebenenfalls ein mittels kapazitivem Verfahren messenden oder erfassenden, Abstandssensor (4), zur mindestens zeitweisen, vorzugsweise jedoch stetigen, Messung oder Sensierung oder Erfassung des axialen Abstandes (Δs) bzw. der Verschiebung und/ oder des radialen Abstands bzw. der Verschiebung (Δv) mindestens zweier Lagerringe (6 ; 7) relativ zueinander in deren Lagerspalt (10), wobei der mindestens eine Abstandssensor (4) über ein geeignetes Mittel (9), vorzugsweise über eine Sensorbohrung pro Abstandssensor (4), in einen der Lagerringe (6 ; 7) und gegenüber einer nichtstufenartigen Kontur oder Geometrie (11) fixiert oder eingebracht ist, wobei die nichtstufenartige Kontur oder Geometrie (11) entweder eine v-förmige Kontur (11 ') oder eine rampenförmige Kontur (11 "), beispielsweise mit stetiger Steigung, oder eine gerundete Kontur (11 "'), gegebenenfalls ähnlich einer Kuhle, oder eine Erhebung (11 *), beispielsweise welche durch Zusatzkörper (12) gebildet ist, aufweist.

## Beschreibung

Die Erfindung betrifft ein Momenten- oder (Groß-)Wälzlager oder eine Drehverbindung aufweisend mindestens einen berührungslos sensierenden, vorzugsweise mittels induktivem Verfahren messenden oder erfassenden, alternativ ein mittels Schallwellen oder Wirbelstromverfahren messenden oder erfassenden, gegebenenfalls ein mittels kapazitivem Verfahren messenden oder erfassenden, Abstandssensor, zur mindestens zeitweisen, vorzugsweise jedoch stetigen, Messung oder Erfassung des axialen Abstandes bzw. der axialen Verschiebung und/ oder des radialen Abstands bzw. der radialen Verschiebung mindestens zweier Lagerringe relativ zueinander in deren Lagerspalt, wobei der mindestens eine Abstandssensor über geeignete Mittel, vorzugsweise über je eine Sensorbohrung, verfügt, die wenigstens in einen der Lagerringe und gegenüber einer nichtstufenartigen Kontur oder Geometrie fixiert oder eingebracht ist, wobei die nichtstufenartige Kontur oder Geometrie entweder eine v-förmige Kontur oder eine rampenförmige Kontur, beispielsweise mit stetiger Steigung, oder eine gerundete Kontur, gegebenenfalls ähnlich einer Kuhle, oder eine Erhebung, beispielsweise welche durch einen Zusatzkörper gebildet ist, aufweist.
Weitere Vorteile und technische Merkmale ergeben sich aus der Beschreibung und den Patentansprüchen.

### Stand der Technik:

Bei Wälzlagern und Großwälzlagern, besteht grundsätzlich das naturgegebene Problem, dass nach längerer Betriebszeit die Gefahr der Erschöpfung oder Materialübermüdung in Form der Beschädigung oder Zerstörung der Laufbahnen oder der Wälzkörper erfolgt. In der Regel ist jedes Wälzlager oder jedes Großwälzlager, sowie auch eine Drehverbindung und/ oder ein Momentenlager, auf eine gewisse Lebensdauer berechnet und ausgelegt.

Es ist auch heute jedoch kaum möglich, den exakten Zeitpunkt der Erschöpfung von vornherein klar zu bestimmen, da in der Praxis der Berechnungszeitpunkt vom tatsächlichen Ausfallzeitpunkt nicht selten differiert. Wesentlich hängt der tatsächliche Ausfallzeitpunkt von Material-, Fertigungs- und Einsatzbedingungen ab. Durch anhaltend gute Schmierung eines solchen Lagers oder einer solchen Drehverbindung mit Öl, Fett oder anderem Schmiermittel, wird in der Regel stets versucht, die Reibung möglichst gering zu halten. Durch eine geeignete und dauerhaft wirkende Schmierung kann sich die Lebensdauer der Lager, Drehverbindungen usw. grundsätzlich erhöhen.

Die vorgenannte Schädigung oder Zerstörung beginnt beispielsweise mit der Bildung von Materialausbrechungen und/ oder Vertiefungen in der Laufbahn, da die Laufbahn häufig in geringerer Härte ausgeführt ist als die mit ihnen zusammenwirkenden Wälzkörper. Diese Vertiefungen können mit zunehmender Betriebszeit größer werden und zu Ausbrechungen in der Laufbahn führen. Bei weiterem Gebrauch des Wälzlagers führen diese Ausbrechungen mitunter zu noch größeren Werkstoffausbrüchen, die dann ein plötzliches Blockieren des Lagers hervorrufen können, was zum Ausfall der gesamten Maschine bzw. Anlage oder des Fahrzeuges führen kann, in der bzw. in dem Lager oder die Drehverbindung eingesetzt wird. Darüber hinaus können durch vorgenannte Ausbrüche eventuell im Lagersystem vorhandene Distanzstücke oder Käfigsegmente geschädigt werden,

Es existieren daher verschiedene technische Anstrengungen, den Verschleiß beispielsweise eines Wälzlagers oder Großwälzlagers durch geeignete Diagnose-und/ oder Verschleißdetektionsvorrichtungen frühzeitig zu erkennen, d.h. bevor es zum vorgenannten Ausfall der gesamten Maschine bzw. Anlage oder des Fahrzeuges kommt.

Aus dem bisherigen Stand der Technik, beispielsweise in der EP 0922 870 B1 beschrieben, sind folglich solche Großwälzlager bekannt, welche über eine Verschleißmessvorrichtung für ein Großwälzlager verfügen dergestalt, dass das Großwälzlager aus zwei Lagerringen besteht, während im zwischen ihnen angeordneten, einen Wälzkörperbauraum bildenden Wälzkörpern angeordnet sind. Die Verschleißmessvorrichtung ist mit einer Anzeige versehen, die eine vorgegebene Auslenkung zwischen den Lagerringen anzeigt und einer Sonde, die in einer Öffnung eines Lagerringes angeordnet ist und mit ihrem Ende mit einer Fläche des anderen Lagerringes in Kontakt treten kann, wobei der der Sonde gegenüberliegende Lagerring mit einer Nut ausgebildet ist, in die das Ende der Sonde hineinragt und wobei die Flächen der Nut jeweils einen Abstand zur Sonde aufweisen, der einem in der zugehörigen Richtung vorgegebenen Verschleißmass entspricht.

Nach herkömmlichem Stand der Technik werden ferner häufig solche elektrisch versorgte bzw. mit elektrischen Leitungen gekoppelte Sonden oder Sensoren verwendet, welche in der Regel berührungslos arbeiten, d.h. beispielsweise Wellen aussenden, beispielsweise mechanische Wellen wie etwa Schallwellen oder auch elektromagnetische Wellen.

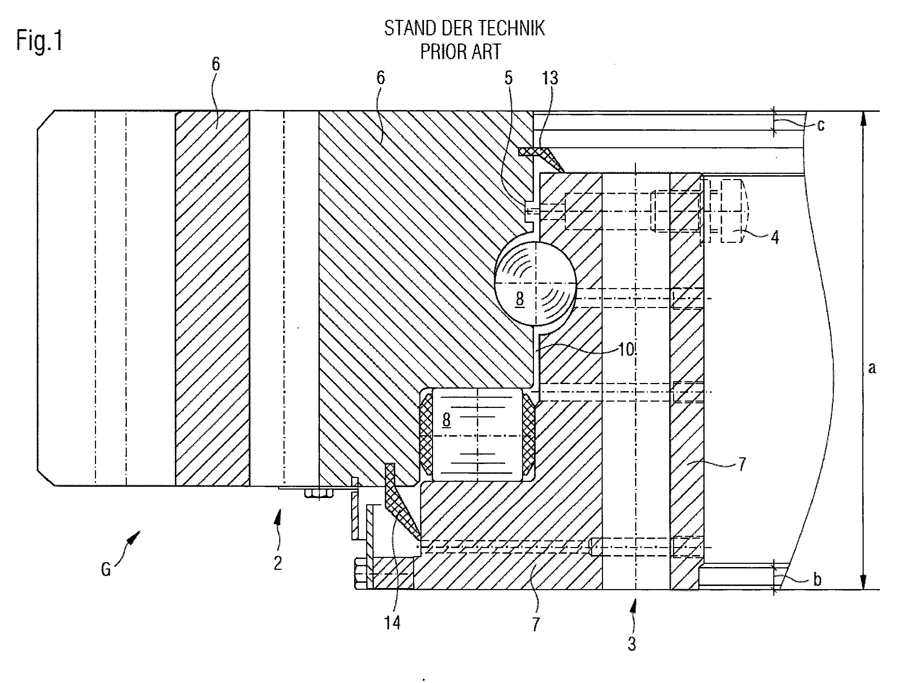

Fig.1 zeigt ein solches Großwälzlager nach dem herkömmlichen Stand der Technik.

In der Praxis haben sich die folgenden Aspekte dieser technischen Ausführung im Stand der Technik als nachteilig herausgestellt, sofern als Sonde ein berührungsloser, beispielsweise Wellen aussendender, Sensor verwendet wird:
Es kann von dem Sensor bzw. der Sonde der Verschleißmessvorrichtung nur der Verschleiß der Kugellaufbahn überwacht bzw. ermittelt werden. Die Wirkung der Verschleißmessvorrichtung geht also nicht über diese Laufbahn hinaus. Schädigungen, welche außerhalb jener Laufbahn auftreten, werden folglich nicht gemessen oder sensiert.

Falls der Sensor bzw. die Sonde der Verschleißmessvorrichtung nicht bündig zum Durchmesser des Innenringes eingebaut ist, kann dieser aufgrund von im Laufbahnsystem befindlicher Ausbrüche oder Späne metallischen Materials beschädigt oder gar zerstört werden.

Da der Sensor bzw. die Sonde der Verschleißmessvorrichtung nach dem herkömmlichen Stand der Technik häufig sehr nahe den Schraubenköpfen bzw. der Muttern angebracht ist, kann eine zu hohe aufgebrachte Flächenpressung bzw. Flächenkräfte den Sensor bzw. die Sonde schädigen oder gar zerstören.

Sensoren bzw. die Sonde der Verschleißmessvorrichtung nach dem vorgenannten Stand der Technik benötigt überdies teilweise signifikant hohen Bauraum, der in der Praxis, insbesondere bei kleinteiligen Präzisionsanwendungen, nicht stets zur Verfügung steht.

Die größten Nachteile jedoch resultieren aus der Form und Lage der Nut, wie nachfolgend beschrieben:
Grundsätzlich wird, erstens, sich diese Nut in der Praxis sehr wahrscheinlich sowohl mit Schmiermittel, insbesondere Fett, als auch mit Metallpartikel der vorgenannten Ausbrüche oder Ausbrechungen sammeln. Diese Partikel können das Sensorsignal bzw. die ausgesendeten Wellen signifikant beeinflussen oder stören. Die Qualität des sensierten bzw. gemessenen oder erfassten Signals leidet aufgrund dieser Beeinflussungen oder Störungen zum Teil erheblich. Häufig wird die Sensorqualität derart schlecht, dass das gesamte Sensierungsergebnis in Zweifel gezogen werden muss.

Zweitens muss diese Nut und die Position des Sensors oder der Sonde genau so ausgerichtet sein, dass ein radialer Verschleiß bzw. das Verkippen des Lagers von dem Sensor bzw. der Sonde bzw. der Verschleißmessvorrichtung detektiert werden kann. Dies ist in der Regel nur möglich, wenn die Sensorspitze oder Sondenspitze exakt auf die Nut "zielt", was dann der Fall ist, wenn das Lager nur in radialer Richtung belastet wird und keine Verkippung in axialer Richtung erfährt. In der Praxis, insbesondere bei Verwendung von vorgenannten Momentenlagern, tritt eine Verkippung des Lagers in axialer Richtung jedoch fast immer auf. Als Folge wird die Nut in axialer Richtung bewegt oder zumindest infolge des Momentes um einen gewissen Winkelversatz in die axiale Richtung verdreht. Die Sensorspitze oder Sondenspitze kann bei axialer Verkippung oder Neigung des Lagers, oder allgemein bei axialer Verschiebung des Lagers, dann auf den Rand- oder Kantenbereich der Nut "zielen". Da der Randbereich einer Nut immer durch eine Stufenbildung begrenzt wird, kann der von der Sensorspitze oder der Sondenspitze sensierte Wert sich dadurch sprungartig verändern.

Die angeschlossene Sonden- bzw. Sensorelektronik-/ elektrik wird folglich und fälschlicherweise eine sprungartige Veränderung des Verschleißwertes erkennen. Will man diese Falscherkennung gänzlich eliminieren, so sollte eine Verschleißmessvorrichtung ähnlich oder exakt der Lehre der EP 0922 870 B1 sicherheitshalber nur für Großwälzlager verwendet werden, welche nur in radialer Richtung und nicht in axialer Richtung belastet werden.

Eine Verwendung einer Verschleißmessvorrichtung ähnlich oder exakt nach der technischen Lehre der EP 0922 870 B1 kann die Sensor- oder Sondenspitze der Verschleißmessvorrichtung bei stark auftretender Axialverschiebung nur eines Lagerrings sogar nachhaltig beschädigen oder zerstören, sofern durch die Axialverschiebung eine Flanke der Nut mit der Sensor- oder Sondenspitze mechanisch kollidiert.

Nur in seltenen Fällen jedoch sind hochbelastete Maschinen bzw. Anlagen sowie Fahrzeuge, Baumaschinen, Kräne, Mobilkräne, Windkraftanlagen, Gezeitenkraftwerke, etc. so belastet, dass nur radiale Lasten wirken.

Zusammenfassend gesprochen lässt sich durch diese vorgenannte Nut-Form, insbesondere durch deren stufenartige Geometrie, beispielsweise in Ausprägung der technischen Lehre der EP 0922 870 B1, höchstens eine radiale Verschiebung, etwa infolge Verschleiß, nicht jedoch eine axiale Verschiebung, zuverlässig sensieren.

### Aufgabe der Erfindung und Beschreibung:

Aus den Nachteilen des beschriebenen Standes der Technik resultiert das die Erfindung initiierende Problem, ein im Betrieb axial- und radial durch (starke) Kräfte und/ oder Momente beaufschlagtes Lager oder (Groß-)wälzlager oder eine Drehverbindung derart weiterzubilden, sodass unter Betrieb eine präzise und genaue sowie zuverlässige Sensierung bzw. Messung bzw. Erfassung der axialen und/ oder radialen Verschiebung und/ oder des Verschleißzustandes des Momenten- oder (Groß-) Wälzlagers bzw. der Drehverbindung in axialer und/ oder radialer Richtung gegeben ist.

Die Lösung das Problems gelingt durch Anbringung von in axialer und/ oder in radialer Richtung messenden oder erfassenden Abstandssensoren an definierten Orten des Lagerrings oder der Lagerringe, wobei ein solcher Abstandssensor jeweils den Abstand bzw. auch die Relativbewegung zwischen Körper (Lagerring) und Messeinrichtung (Abstandssensor) zu sensieren inder Lage ist. Diese Relativbewegung kann entweder aus dem Verschleiß von Lagerkomponenten herrühren, oder - gegebenenfalls in überlagernder Weise - aus der Einwirkung von Belastungen auf das Lager oder die Drehverbindung, also infolge äußerlich eingebrachter Kräfte und/ oder Momente, herrühren.

Die Lösung dieses Problems gelingt insbesondere auch dadurch, dass im Sinne der vorliegenden Erfindung mindestens ein berührungslos sensierender, vorzugsweise ein mittels induktivem Verfahren messender oder erfassender, alternativ ein mittels Ultraschall- oder Wirbelstromverfahren messender oder erfassender, gegebenenfalls ein mittels kapazitivem Verfahren messender oder erfassender, Abstandssensor zur mindestens zeitweisen, vorzugsweise jedoch stetigen, Messung oder Erfassung des axialen Abstandes (Δs) bzw. der axialen Verschiebung und/ oder radialen Verschiebung (Δv) bzw. des radialen Abstandes mindestens zweier Lagerringe relativ zueinander eingesetzt wird.

Dieser mindestens eine Abstandssensor ist über geeignete Mittel vorzugsweise so in den Lagerspalt zwischen den jeweiligen gegeneinander verdrehbaren Lagerringen eingebracht, vorzugsweise über eine Sensorbohrung in einem der Lagerringe, dass gegenüber dem Abstandssensor eine nichtstufenartige Kontur oder Geometrie gegeben ist, wobei sich diese nichtstufenartigen Kontur oder Geometrie im zum Abstandssensor gegenüberliegenden Lagerring befindet und etwa um die Breite des Lagerspaltes, vorzugsweise mindestens 0.20 mm, idealerweise zwischen 0.20 und 9.5 mm oder gar zwischen 1.0 mm und 4.0 mm, gegebenenfalls um die Breite des Lagerspaltes +/- 0.2 bis 3.5 mm, vom Abstandssensor beabstandet ist.

Die nichtstufenartige Kontur oder Geometrie weist dabei entweder eine v-förmige Kontur oder eine rampenförmige Kontur oder eine gerundete Kontur auf. Alternativ kann diese nichtstufenartige Kontur oder Geometrie durch einen oder von einem Zusatzkörper gebildet werden, welcher in denjenigen Lagerring eingebracht oder fixiert ist, der dem Abstandssensor gegenüberliegt.

Selbstverständlich bezieht sich die Erfindung nicht nur auf den Einsatz in Wälz- oder Momentenlagern, sondern auch auf alle Arten der Drehverbindungen und Großwälzlager, idealerweise für den Einsatz in Maschinen bzw. Anlagen sowie Fahrzeugen wie: Tunnelbohrmaschinen, Stacker-Maschinen, Baumaschinen, Landwirtschaftsmaschinen, Kränen, Mobilkränen, Hubarbeitsbühnen, Windkraftanlagen, Gezeitenkraftwerken, Medizintechnischen Apparaten, zur rotatorischen Verstellung von Lafetten in Militärfahrzeugen oder zur Verstellung von Wasserlöschkanonen auf Feuerwehrfahrzeugen, zur rotatorischen Lagerung von Turbinen und/ oder Rotoren in Energiekraftwerken, in Solaranlagen, Fahrgeschäften in Vergnügungsparks, et cetera.

In einer weiteren Ausgestaltungsform wird die Erfindung auch in Drehverbindungen von Schwenkantrieben, auch "Schwenktriebe" genannt, und damit in Verbindung stehenden Schneckengetriebesystemen eingesetzt.

Diese Momenten- oder Wälzlager bzw. Großwälzlager und oder Drehverbindungen können dabei als Tonnenrollenlager, Zylinderrollenlager, Nadellager, Kegelrollenlager oder gar als Kugellager ausgeführt sein, mit mindestens einer Wälzkörperreihe. Alternativ sogar als Kreuzrollenlager oder Kombinationslager oder gar in Ausgestaltung eines Vierpunktlager-Kugellagers.

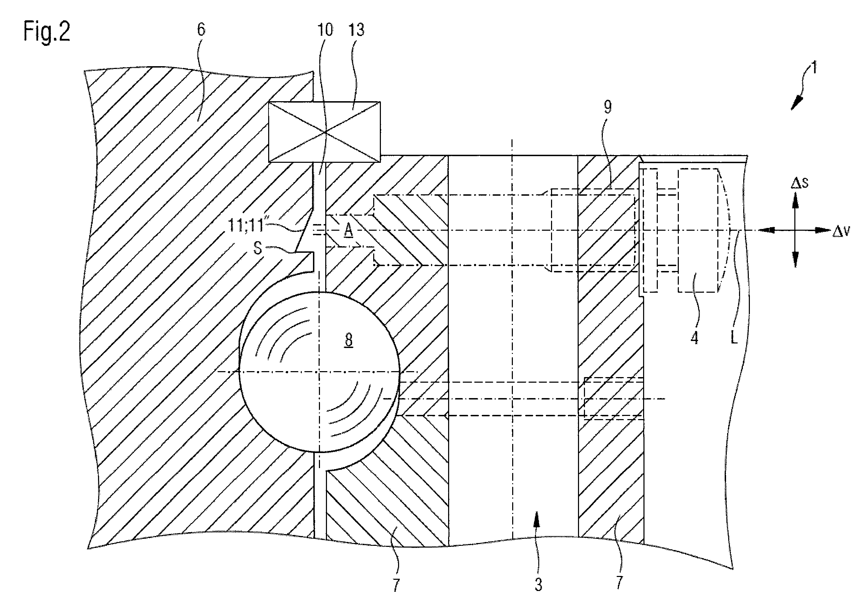

Einzelne beschreibende Merkmal, Einzelheiten, Vorteile und Wirkungen auf der Basis der Erfindung, ergeben sich aus der folgenden Beschreibung bevorzugter Ausführungsformen der Erfindung sowie anhand der nachfolgenden Zeichnungen:
So zeigt etwa Fig. 2 klar die nichtstufenartige Kontur oder Geometrie (11), insbesondere als v-förmige oder rampenförmige Kontur im zum Abstandssensor (4) gegenüberliegenden Lagerring (6). In dieser ersten vorteilhaften Ausgestaltungsform der Erfindung steht dem sensierenden oder erfassenden Ende des Abstandssensors (4) im einen Lagerring eine sich in axialer Richtung stetig ändernde Kontur oder Geometrie (11") im gegenüberliegenden Lagerring gegenüber.

Fig. 2 beschreibt auch die folgende Ausgestaltungsform beispielhaft:
Diese nichtstufenartige Geometrie ist in Fig. 2 im Gegensatz zum Stand der Technik - siehe Fig. 1 - rampenförmig (11 ") ausgeführt. Dies hat den besonderen Vorteil, dass bei Verschiebung des einen Lagerrings gegenüber dem anderen Lagerring in axialer Richtung der direkte Abstand (Δs) zwischen dem lagerspaltseitigem Ende (A) des Sensors (4) zum gegenüberliegenden Lagerring (6) einen sich stetig ändernden Betrag annimmt und zwar so lange, bis ein Scheitelpunkt (S) erreicht ist.

Ausgehend beispielsweise vom oberen axialen Ende des Spaltes (10) stellt sich diese stetige Änderung der Kontur (11 ; 11 ") als Einkerbung oder Kerbe - oder eben als vorgenannte 'Rampe' - dar.

Diese vorgenannte stetige Veränderung des Abstands zwischen dem lagerspaltseitigen Ende (A) des Sensors (4) und der nichtstufenartigen Kontur oder Geometrie (11) ist infolge des Meßverfahrens des jeden berührungslos arbeitenden Abstandsensors (4) detektierbar oder sensierbar bzw. erfassbar. Wrid beispielsweise ein auf Schallwellen basierendes Meßverfahren des Abstandssensors (4) verwendet, so wird die vorgenannte Veränderung des Abstands durch die veränderte Laufzeit der Schallwelle erkennbar, denn in metallischem Material ist die Schallgeschwindigkeit höher als z.B.: wie in der Luft im Lagerspalt (10). Selbst wenn der Lagerspalt (10) mit Öl und/ oder Schmiermittel befüllt ist, ergibt sich eine veränderte Laufzeit der Welle gegenüber einem metallischen Material bspws. des Lagerrings.

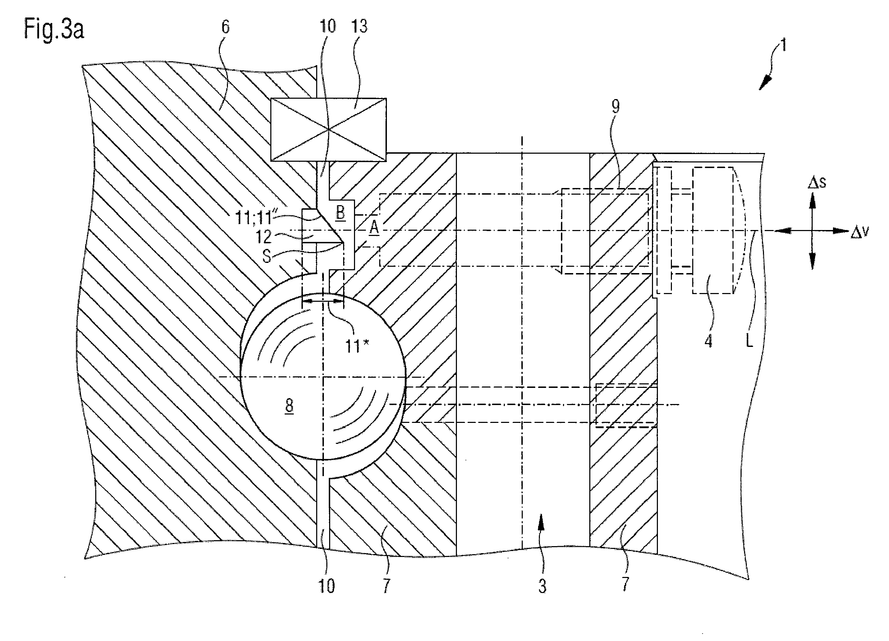

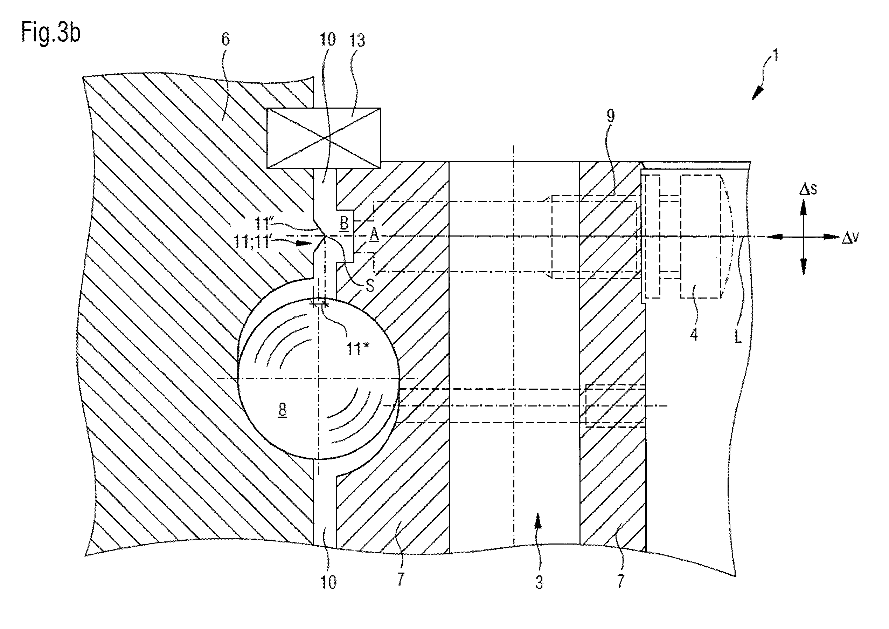

Fig. 3 a zeigt eine andere Variante der vorgenannten rampenförmigen (11 ") Kontur oder Geometrie. In Fig. 3 a wird diese nichtstufenartige Geometrie (11) durch einen separaten Körper, den sog. Zusatzkörper (12), in das Momenten- oder (Groß-)Wälzlager (1) bzw. in die Drehverbindung (1) eingebracht. Es kann sich bei diesem Zusatzkörper (12) etwa um einen umlaufenden Ring handeln. Siehe nachfolgende Beschreibung unten.

Der vorgenannte Vorteil, welchen die nichtstufenartige Geometrie (11) bringt wird ggfs. noch gesteigert, wenn gemäß Fig. 3 a und/ oder Fig. 3 b der Scheitelpunkt (S) der maximalen Erhebung auf dieser nichtstufenartige Geometrie oder Kontur (11) liegt und in den Lagerspalt (10) hineinragt.

In Fig. 3 a und Fig. 3 b ist dieser Scheitelpunkt (S) als eine Spitze ausgeführt. Es ergibt sich also eine analytische Unstetigkeit der nichtstufenförmigen Kontur (11) im Scheitelpunkt (S).

In Fig. 4 a und Fig. 4 b hingegen ist dieser Scheitelpunkt (S) als der höchste Punkt auf einer Kurvenkontur (11) dargestellt, wobei hier die analytische Stetigkeit im Scheitelpunkt (S) gegeben ist.

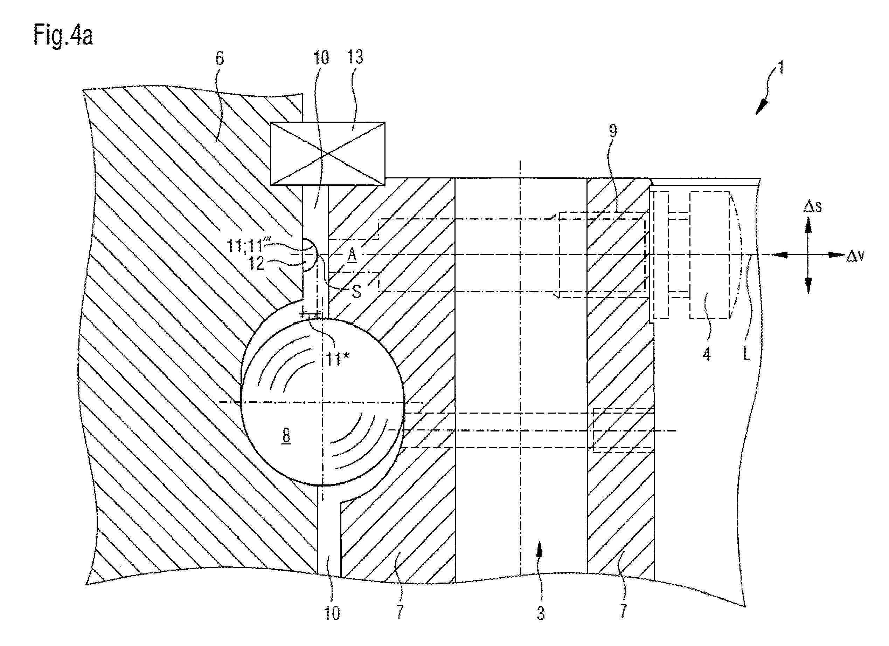

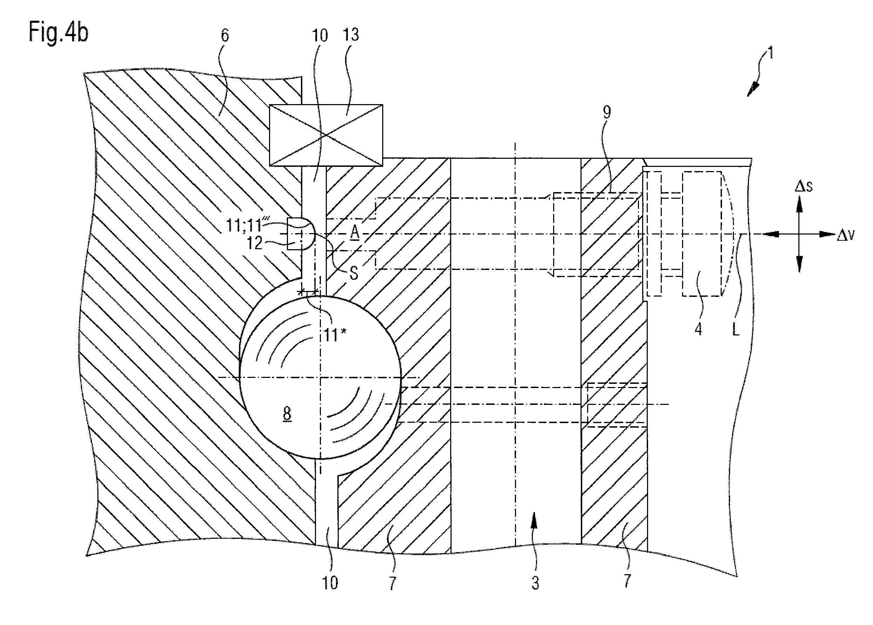

Die vorgenanten Varianten oder Ausführungsformen (vgl. Fig. 3a und Fig. 3b verglichen mit Fig. 4 a und Fig. 4 b) bringen den großen Vorteil mit sich, dass der Scheitelpunkt (S) als "Umschaltpunkt" bei der Sensierung der axialen Verschiebung (Δs) gilt. Wird beispielsweise in Ruhelage, d.h. bei einem nichtbelastetem Momenten- oder (Groß-)Wälzlager (1) oder einer nichtbelasteten Drehverbindung (1), das lagerspaltseitige Ende (A) des Abstandssensors (4) direkt auf diesen Scheitelpunkt (S) justiert oder ausgerichtet, so ist es während des späteren Betriebs dieser Momenten- oder (Groß-)Wälzlagers (1) bzw. dieser Drehverbindung (1) einfach möglich, belastungs- und/ oder verschleißbedingte Verschiebungen in axialer Richtung (Δs) ausgehend von diesem Scheitelpunkt (S) zu detektieren bzw. zu erfassen oder zu sensieren.

Der Scheitelpunkt (S) dient also als "Nullage" oder als "Referenzposition" für die Messwerte oder Messergebnisse eines berührungslos arbeitenden Abstandssensors (4).

Nach der bisher herkömmlichen Technik im Sinne der Fig. 1 ist dies klar nicht möglich, da auch bei axialer Verschiebung des Großwälzlagers (G) der Sensor (4) immer auf eine Nut (5) zeigt, wobei diese Nut entlang Ihres Fußes stets eine gleich hohe Einstichtiefe besitzt. Eine dezidierte Information über den Verschiebungsweg in axialer Richtung (Δs) ist bei einem Großwälzlager nach Fig. 1 klar nicht gegeben.

Der Scheitelpunkt (S) der nichtstufenartigen Kontur oder Geometrie (11) im Sinne der Erfindung (1) hingegen kennzeichnet jedoch den Ort der maximalen Erhebung - oder alternativ den Ort der Maximalen Einkerbung wie in Fig. 2 dargestellt - der nichtstufenartigen Kontur oder Geometrie (11) gegenüber dem diese Kontur (11) beherbergenden Lagerring (6) und leistet somit Vorschub für eine auswertbare Weginformation in axialer Richtung (Δs), die der herkömmliche Stand der Technik, vgl. Fig. 1, entbehrt.

In einer sehr vorteilhaften Ausgestaltungsform, wie beispielsweise in Fig. 2 sowie in Fig. 3 a und auch in Fig. 3 b dargestellt, ist die nichtstufenartigen Kontur oder Geometrie (11), alternativ deren Scheitelpunkt (S), etwa um die Breite des Lagerspaltes (10), vom Abstandssensor (4), insbesondere vom lagerspaltseitigen Ende (A) des Abstandssensors (4), beabstandet.

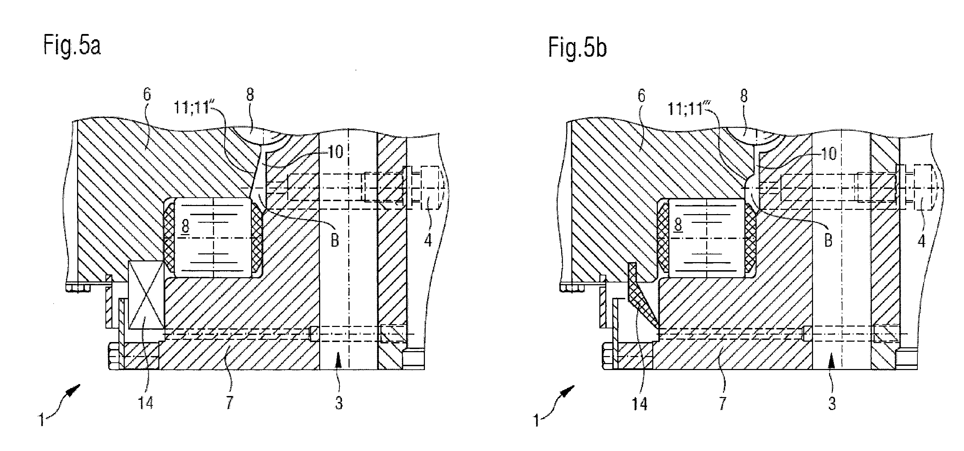

Es ist im Sinne der Erfindung auch möglich, auf eine nichtstufenartige Kontur (11) ohne Scheitelpunkt (S) zurückzugreifen, so wie beispielsweise in Fig. 5 a und Fig. 5 b dargestellt. Dies empfiehlt sich insbesondere dann, wenn der zu sensierende Bereich (B) in der Nähe eines Absatzes oder einer Kante eines Lagerringes (6 ; 7) liegt, beispielsweise in der Nähe von Wälzkörpern (8) oder zwischen zwei Reihen mit Wälzkörpern (8).

Der direkte Abstand der nichtstufenartigen Geometrie oder Kontur (11) vom Abstandssensor (4), d.h. insbesondere von dessen lagerspaltseitigen Ende (A), kann jedenfalls beispielsweise mindestens 0.20 mm betragen, gegebenenfalls sogar in einem großen Bereich zwischen 0.20 und 9.5 mm betragen, idealerweise sogar zwischen 1.0 mm und 4.0 mm betragen.

Es wird ferner festgestellt, dass erfindungsgemäß und vorteilhafterweise der Abstandssensor (4) stets in dem der nichtstufenartigen Kontur oder Geometrie (11) gegenüberliegenden Lagerring (6), eingebracht ist.

Fig. 3 a sowie Fig. 3 b und Fig. 5 a und auch Fig. 5 b weisen einen Bereich (B) auf, in welchem die nichtstufenartige Kontur oder Geometrie (11) vorhanden ist. Dieser Bereich (B) ist vorzugsweise so geräumig ausgestaltet, dass zwischen dem lagerspaltseitigen Ende (A) des Abstandssensors (4) mindestens 0.2 mm oder 3.5 mm Abstand zur nichtstufenartigen Kontur oder Geometrie (11) im gegenüberliegenden Lagerring (6) eingehalten werden können.

Ein jeder Abstandssensor (4) ist vorteilhafterweise entlang seiner Längsachse oder Längserstreckung (L) in je ein Mittel (9) zur Sensoraufnahme, vorzugsweise eine spanend eingebrachte Sensorbohrung (9) eingebracht.

Diese Einbringung mindestens eines Abstandssensors (4) erfolgt in der Praxis über Fügung oder Pressung oder Schraubung - alternativ sogar über Klebung und/ oder mittels Sicherungsstift.

Dieses Mittel (9) zur Sensoraufnahme, beispielsweise die Sensorbohrung oder Sensor-Aussparung, kann spanend oder auch spanlos metallbearbeitend hergestellt sein, beispielweise durch Gußfertigungstechnologie oder Kaltformfertigungstechnologie oder Stoß- bzw. Scherfertigungstechnologie.

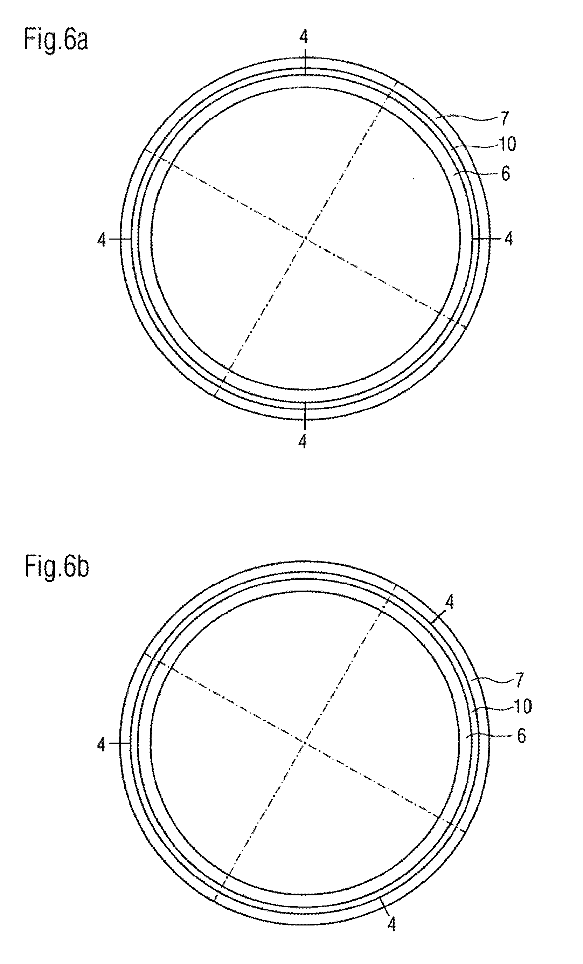

Es hat sich als besonders vorteilhaft erwiesen, wenn mehrere Abstandssensoren (4) pro Momenten- oder (Groß-)Wälzlager (1) oder Drehverbindung (1) vorhanden sind, beispielsweise so wie in Fig. 6 a und/ oder Fig. 6 b gezeigt.

Demnach können drei Abstandssensoren (4) in einem Lagerring (7) eingebracht sein und mit deren lagerspaltseitigen Enden (A) in Richtung des anderen Lagerrings (6) - jedenfalls immer in Richtung des Lagerspalts (10) - zielen, wobei beispielsweise drei Abstandssensoren (4) untereinander im Uhrzeigersinn um je 120° beabstandet sein können - oder aber beispielsweise vier Abstandssensoren (4) untereinander im Uhrzeigersinn um je 90° beabstandet sein können. Letzgenannte Ausführungsform nach Fig. 6 a hat gegenüber Fig. 6 b den Vorteil, dass ein Sensor (4) pro Kreissektor eingebracht ist, wodurch die Messtechnik mehr auswertbare Daten erhält als wenn nur drei Sensoren (4) pro Momenten- oder (Groß-)Wälzlager (1) oder Drehverbindung (1) vorhanden sind.

Gemäß der Lehre der Erfindung (1) ist der Lagerspalt (10), alternativ der Bereich (B), zwischen Abstandssensor (4), insbesondere vom lagerspaltseitigen Ende (A) des Abstandssensors (4), und der nichtstufenartigen Kontur oder Geometrie (11) mit Fett oder Öl oder Schmiermittel befüllt, um insbesondere die Übermittlung von Schallwellen oder gar Ultraschallwellen zu fördern, denn es ist aus der Physik her bekannt, dass Schallwellen oder gar Ultraschallwellen in fluidem Medien, selsbt in zähflüssigen Fluidmedien, eine höhere Ausbreitungsgeschwindigkeit besitzen als in Luftmedien.

Insofern ist ein mit Öl oder Schmiermittel befüllter Lagerspalt (10) im Sinne der Erfindung (1) einem "belüfteten", d.h. einem "mit Luft befüllten", Lagerspalt (10) vorzuziehen. Wir jedoch kein mittels Schallwellen messendes oder erfassendes Verfahren verwendet, sondern beispielsweise ein rein induktiv wirkendes berührungsloses Abstandsmessverfahren, so ist es unerheblich ob der Lagerspalt (10) mit Fluid (insbesondere Öl und/ oder Schmiermittel) befüllt ist oder nicht mit Öl/Schmiermittel befüllt ist - d.h. nur "mit Luft befüllt" ist.

Besonders gut funktioniert die Erfindung, wenn mehrere Abstandssensoren (4) in einem gemeinsamen Mittel (9) zur Sensoraufnahme eingefügt oder eingepresst oder eingeschraubt sind. Es ist dabei von Vorteil, wenn etwa ein erster Abstandssensor (4) radiale (Δv) Verschiebung oder den radialen (Δv) Abstand misst oder sensiert oder erfasst und ein zweiter Abstandssensor (4) den axialen (Δs) Abstand bzw. die axiale Verschiebung (Δs) misst oder sensiert oder erfasst.

Somit gewinnt der Anwender der Erfindung (1) gleichfalls qualifizierte Verschiebungs- und/ oder Abstandsdaten der beiden Lagerringe (6 ; 7) sowohl in axialer als auch in radialer richtung, insbesondere hinsichtlich der Verschleiß- und/oder Belastungsrichtung.

Grundsätzlich kann das Momenten- oder (Groß-)Wälzlager (1) oder die erfindungsgemäße Drehverbindung (1) so ausgestaltet sein, dass die axiale Erstreckung der nichtstufenartigen Kontur oder Geometrie (11) 20.0 mm nicht übersteigt und/ oder die radiale Erstreckung der nichtstufenartigen Kontur oder Geometrie (11) 10.0 mm nicht übersteigt. Praxisnah und daher besonders vorteilhaft beispielsweise ist diese nichtstufenartige Kontur oder Geometrie (11) rampenförmig (11 ") ausgeführt - etwa ist in einem Winkel zwischen 5° und 95°, vorzugsweise zwischen 30° und 65°, insbesondere um etwa 45°, vorzugsweise wobei vorzugsweise im Endpunkt der Rampe der Scheitelpunkt (S) gebildet ist.

Der vorgenannte Zusatzkörper (12) besteht idealerweise aus einem metallischen Werkstoff, beispielsweise aus einem ferromagnetischen Werkstoff, beispielsweise um als ein dem Abstandssensor (4), insbesondere dem lagerspaltseitigen Ende (A) des Abstandssensors (4), gegenüberliegender Meß-Referenzkörper zu fungieren.

In einer weiterführenden Ausführungsform der Erfindung kann der Zusatzkörper (12) als ringförmige Spule oder Leiterschleife ausgeführt sein, vorzugsweise welche gegenüber dem ihn beherbergenden Lagerring mittels eines elektrisch isolierenden Materiales, wie beispielsweise Keramik oder Elastomermaterial oder Kunststoffmaterial oder Pappe oder Papiermaterial, elektrisch potential getrennt ist.

Die Lehre der Erfindung (1) sieht ferner vor, dass die nichtstufenartige Kontur oder Geometrie (11), oder sogar, alternativ, der Zusatzkörper (12), ringförmig umlaufend an mindestens einer Stelle des sie/ ihn beherbergenden Lagerrings angebracht oder eingebracht ist.

Dabei kann diese Anbringung oder Einbringung sogar ringsegmentförmig erfolgen, sodass die nichtstufenartige Kontur oder Geometrie (11), oder alernativ der der Zusatzkörper (12), in mindestens ein Ringsegment des ihn beherbergenden Lagerrings (6 ; 7) an- oder eingebracht ist, vorzugsweise unlösbar an- oder eingebracht ist, alternativ angeklebt oder angelötet oder gar eingepresst ist.

Zurückkommend auf vorgenannten Scheitelpunkt (12) ist zu erwähnen, dass selbiger die maximale Erhebung (11 *) der nichtstufenartigen Kontur oder Geometrie (11) definiert. Diese Erhebung kann auch negativ ausgeführt sein (Einkerbung). Aufgrund der berücjtigten Kerbwirkung ist jedoch der positive Ausführungsfall vorzuziehen. Um die Montierbarkeit der Erfindung (1) trotz einer solchen Erhebung (11 *) in der Praxis zu gewährleisten, sollte jene höchstens etwa vier Fünftel der Breite des Lagerspaltes (10) betragen, beispielsweise höchstens jedoch 7.5 mm.

### Bezugszeichenliste:

| | | | |
|---|---|---|---|
| 1 | Momenten- oder (Groß-)Wälzlager bzw. Drehverbindung | | |
| G | Großwälzlager | | |
| 2 | Bohrung | 3 | Bohrung |
| 4 | Abstandssensor | 5 | Nut |
| 6 | Lagerring | 7 | Lagerring |
| 8 | Wälzkörper | 9 | Mittel, z.B. Sensorbohrung |
| 10 | Lagerspalt | 11' | v-förmige Kontur |
| 11 | nichtstufenartige Geometrie | 11 " | rampenförmige Kontur |
| 12 | Zusatzkörper | 11'" | gerundete Kontur |
| Δs | Abstand | 11 * | Erhebung |
| Δv | Verschiebung | 13 | Spaltdichtung |
| B | Bereich | 14 | Dichtung |
| L | Längerstreckung | A | lagerspaltseitiges Ende |
| S | Scheitelpunkt | | |

## Patentansprüche

1. Momenten- oder (Groß-)Wälzlager (1) oder Drehverbindung (1) aufweisend:
- mindestens einen berührungslos sensierenden, vorzugsweise mittels induktivem Verfahren messenden oder erfassenden, alternativ ein mittels Schallwellen oder Wirbelstromverfahren messenden oder erfassenden, gegebenenfalls ein mittels kapazitivem Verfahren messenden oder erfassenden, Abstandssensor (4),
- zur mindestens zeitweisen, vorzugsweise jedoch stetigen, Messung oder Sensierung oder Erfassung des axialen Abstandes (Δs) bzw. der Verschiebung und/oder des radialen Abstands bzw. der Verschiebung (Δv) mindestens zweier Lagerringe (6 ; 7) relativ zueinander in deren Lagerspalt (10),
- wobei der mindestens eine Abstandssensor (4) über ein geeignetes Mittel (9), vorzugsweise über eine Sensorbohrung pro Abstandssensor (4), in einen der Lagerringe (6 ; 7) und gegenüber einer nichtstufenartigen Kontur oder Geometrie (11) fixiert oder eingebracht ist,
- wobei die nichtstufenartige Kontur oder Geometrie (11) entweder eine v-förmige Kontur (11 ') oder eine rampenförmige Kontur (11 "), beispielsweise mit stetiger Steigung, oder eine gerundete Kontur (11 "'), gegebenenfalls ähnlich einer Kuhle, oder eine Erhebung (11 *), beispielsweise welche durch Zusatzkörper (12) gebildet ist, aufweist.

2. Momenten- oder (Groß-)Wälzlager (1) oder Drehverbindung (1) nach Anspruch 1 **dadurch gekennzeichnet, dass**
sich die nichtstufenartige Kontur oder Geometrie (11) im zum Abstandssensor (4) gegenüberliegenden Lagerring (6 ; 7) befindet.

3. Momenten- oder (Groß-)Wälzlager (1) oder Drehverbindung (1) nach Anspruch 1 oder nach dem vorgenannten Anspruch **dadurch gekennzeichnet, dass** mindestens ein Scheitelpunkt (S) der nichtstufenartigen Kontur oder Geometrie (11) gegeben ist, kennzeichnend den Ort der maximalen Erhebung der nichtstufenartigen Kontur oder Geometrie (11) gegenüber dem diese Kontur (11) beherbergenden Lagerring (6 ; 7).

4. Momenten- oder (Groß-)Wälzlager (1) oder Drehverbindung (1) nach Anspruch 1 oder nach dem vorgenannten Anspruch **dadurch gekennzeichnet, dass** die nichtstufenartigen Kontur oder Geometrie (11), alternativ deren Scheitelpunkt (S), etwa um die Breite des Lagerspaltes (10), beispielsweise um mindestens 0.20 mm, gegebenenfalls um zwischen 0.20 und 9.5 mm, idealerweise sogar um zwischen 1.0 mm und 4.0 mm, vom Abstandssensor (4), insbesondere vom lagerspaltseitigen Ende (A) des Abstandssensors (4), oder von dem der nichtstufenartigen Kontur oder Geometrie (11) gegenüberliegenden Lagerring (6 ; 7), beabstandet ist.

5. Momenten- oder (Groß-)Wälzlager (1) oder Drehverbindung (1) nach Anspruch 1 oder nach einem der beiden vorgenannten Ansprüche **dadurch gekennzeichnet, dass**
die nichtstufenartige Kontur oder Geometrie (11), alternativ deren Scheitelpunkt (S), um exakt die Breite des Lagerspaltes (10) abzüglich oder zuzüglich eines Bereiches (B), beispielsweise der Größe von (B) = +/- 0.2 mm bis (B) = +/- 3.5 mm, vom Abstandssensor (4), insbesondere vom lagerspaltseitigen Ende (A) des Abstandssensors (4), oder von dem der nichtstufenartigen Kontur oder Geometrie (11) gegenüberliegenden Lagerring (6 ; 7), beabstandet ist.

6. Momenten- oder (Groß-)Wälzlager (1) oder Drehverbindung (1) nach Anspruch 1 oder einem der vorgenannten Ansprüche **dadurch gekennzeichnet, dass** jeweils ein Abstandssensor (4) entlang dessen Längsachse oder Längserstreckung (L) in je ein Mittel (9) zur Sensoraufnahme, vorzugsweise eine spanend eingebrachte Sensorbohrung (9), eingefügt oder eingepresst oder eingeschraubt, alternativ eingeklebt und/ oder mittels Sicherungsstift versehen, ist, wobei alternativ dieses Mittel (9) spanlos metallbearbeitend hergestellt wurde, beispielweise durch Gußfertigungstechnologie oder Kaltformfertigungstechnologie oder Stoß- bzw. Scherfertigungstechnologie.

7. Momenten- oder (Groß-)Wälzlager (1) oder Drehverbindung (1) nach Anspruch 1 oder einem der vorgenannten Ansprüche **dadurch gekennzeichnet, dass** der Lagerspalt (10), alternativ der Bereich (B), zwischen Abstandssensor (4), insbesondere vom lagerspaltseitigen Ende (A) des Abstandssensors (4), und der nichtstufenartigen Kontur oder Geometrie (11) mit Fett oder Öl oder Schmiermittel befüllt ist, insbesondere um die Übermittlung von Schallwellen oder gar Ultraschallwellen zu fördern.

8. Momenten- oder (Groß-)Wälzlager (1) oder Drehverbindung (1) alternativ zum vorgenannten Anspruch **dadurch gekennzeichnet, dass** mehrere Abstandssensoren (4) in einem gemeinsamen Mittel (9) zur Sensoraufnahme eingefügt oder eingepresst oder eingeschraubt sind, beispielsweise wobei ein erster Abstandssensor (4) radiale Verschiebung (Δv) misst oder sensiert oder erfasst und ein zweiter Abstandssensor (4) axialen Abstand (Δs) misst oder sensiert oder erfasst.

9. Momenten- oder (Groß-)Wälzlager (1) oder Drehverbindung (1) nach Anspruch 1 oder einem der vorgenannten Ansprüche **dadurch gekennzeichnet, dass** die axiale Erstreckung der nichtstufenartigen Kontur oder Geometrie (11) 20.0 mm nicht übersteigt und/ oder die radiale Erstreckung der nichtstufenartigen Kontur oder Geometrie (11) 10.0 mm nicht übersteigt, beispielsweise wobei diese nichtstufenartige Kontur oder Geometrie (11) rampenförmig (11 ") ausgeführt ist in einem Winkel zwischen 5° und 95°, vorzugsweise zwischen 30° und 65°, insbesondere um etwa 45°, vorzugsweise wobei im Endpunkt der Rampe der Scheitelpunkt (S) gebildet ist.

10. Momenten- oder (Groß-)Wälzlager (1) oder Drehverbindung (1) nach Anspruch 1 oder einem der vorgenannten Ansprüche **dadurch gekennzeichnet, dass** wenigstens ein Zusatzkörper (12) aus einem metallischen Werkstoff besteht, beispielsweise aus einem ferromagnetischen Werkstoff, beispielsweise um ferner als ein dem Abstandssensor (4), insbesondere dem lagerspaltseitigen Ende (A) des Abstandssensors (4), gegenüberliegender Meß-Referenzkörper zu fungieren.

11. Momenten- oder (Groß-)Wälzlager (1) oder Drehverbindung (1) nach Anspruch 1 oder einem der vorgenannten Ansprüche **dadurch gekennzeichnet, dass** die nichtstufenartige Kontur oder Geometrie (11), alternativ der Zusatzkörper (12), ringförmig umlaufend an mindestens einer Stelle des sie/ ihn beherbergenden Lagerrings (6 ; 7) angebracht oder eingebracht ist, alternativ sogar ringsegmentförmig in mindestens ein Ringsegment des ihn beherbergenden Lagerrings (6 ; 7) an- oder eingebracht ist, vorzugsweise unlösbar an- oder eingebracht ist, alternativ angeklebt oder angelötet oder gar eingepresst ist.

12. Momenten- oder (Groß-)Wälzlager (1) oder Drehverbindung (1) nach Anspruch 1 oder einem der vorgenannten Ansprüche **dadurch gekennzeichnet, dass** die Erhebung (11 *) der nichtstufenartigen Kontur oder Geometrie (11) höchstens etwa vier Fünftel der Breite des Lagerspaltes (10) beträgt, beispielsweise höchstens 7.5 mm, vorzugsweise jedoch höchstens etwa drei Viertel der Fünftel der Breite des Lagerspaltes (10) beträgt, idealerweise jedoch weniger als 3.0 mm beträgt.

13. Momenten- oder (Groß-)Wälzlager (1) oder Drehverbindung (1) nach Anspruch 1 oder einem der vorgenannten Ansprüche **dadurch gekennzeichnet, dass** ein Zusatzkörper (12) als ringförmige Spule oder Leiterschleife ausgeführt ist, vorzugsweise welche gegenüber dem ihn beherbergenden Lagerring (6 ; 7), mittels eines elektrisch isolierenden Materiales wie beispielsweise Keramik oder Elastomermaterial oder Kunststoffmaterial oder Pappe oder Papiermaterial, elektrisch potential getrennt ist.

14. Momenten- oder (Groß-)Wälzlager (1) oder Drehverbindung (1) nach Anspruch 1 und ausgeführt als ein Kegelrollenlager oder als ein Kugellager, alternativ als ein Zylinderrollenlager, alternativ als ein Nadellager, alternativ als ein Tonnenrollenlager,
**ferner aufweisend** mindestens eine ringförmig umlaufende Reihe mit Wälzkörpern (8) und eingebaut oder angebaut in eine Maschine bzw. Anlage oder Fahrzeugbaugruppe,
beispielsweise in einer Tunnelbohrmaschine oder in einer Baumaschine oder in einer Landwirtschaftsmaschine oder in einem Kran oder in einer Hubarbeitsbühne oder in einer Wind- oder Gezeitenkraftanlage oder in einer medizintechnischen Apparatur, zur rotatorischen Relativverstellung mehrerer Lagerringe (6 ; 7) ineinander, beispielswiese zur Relativverstellung einer Lafette eines Militärfahrzeugs oder alternativ zur Relativverstellung einer Wasserlöschkanone eines Feuerwehrfahrzeugs oder zur Relativverstellung des Rotors eines Energiekraftwerks, gegebenenfalls sogar zur Relativverstellung einer Schwenkachse einer Solar- oder Photovoltaikanlage.

15. Momenten- oder (Groß-)Wälzlager (1) oder Drehverbindung (1) nach Anspruch 1 oder nach dem vorgenannten Anspruch
**aufweisend** eine damit ausgestattete Schwenkantrieb- oder Schwenktriebs-Vorrichtung und/ oder ein mit einer solchen Schwenkantrieb- oder Schwenktriebs-Vorrichtung in Verbindung stehendes Schneckengetriebesystem.
